Europäisches Patentamt

European Patent Office

Office européen des brevets

(19)

(11) Numéro de publication: **0 030 521**
**A1**

## (12) DEMANDE DE BREVET EUROPEEN

(21) Numéro de dépôt: 80830098.2

(22) Date de dépôt: 21.11.80

(51) Int. Cl.³: **B 60 C 27/10**

(30) Priorité: 26.11.79 IT 6481379

(71) Demandeur: **Ricciardi, Vittorio, Via G. Angrisani, 2, I-84100 Salerno (IT)**

(43) Date de publication de la demande: **17.06.81 Bulletin 81/24**

(84) Etats contractants désignés: **AT BE CH DE FR GB LI LU NL SE**

(72) Inventeur: **Ricciardi, Vittorio, Via G. Angrisani, 2, I-84100 Salerno (IT)**

⑭ Outil universel à bras régiable à appliquer aux roues des véhicules sur routes neigeuses et similaires.

⑰ Outil remplaçant les chaînes antidérapantes traditionnelles et comportant des tiges de réglage (1) à crémaillères déplaçables au moyen d'une boîte d'engrenages (2) à manivelle de commande (3).

## DESCRIPTION

L'outil inventé est composé essentielment des parties énoncées ci _ dessous, dans l'ordre des chiffres reportés dans les planches explicative:

1) Tiges de réglage avec crémaillère, n°4.

2) Boîtes à engrenages, interchangeables, avec duex boutonnières verticales pour le passage des tiges et une serie de trous disposés en cercle pour la mise en place de la cheville de fixâge de la manivelle de commande, n 2.

3) Manivelle de commande.

4) Pommeau de la manivelle.

5) Chevilde de fixage de la manivelle.

6) Pivot en croissant de lune fileté, avec écrou pour le traîment es engrenage.

7) Goujon d'rrêt des boîtes, avc ressort de rappel et bague de déblocage.

8) Engrenages avec mentonnet de frappe, n 2.

9) Cercle flexsible, avc noeux l'enclenchement des chaînes.

10) Mousquetons élastiques.

11) Bagues- entretoises des engrenages.

## FONCTIONNEMENT

Dans les deux boîtes, perfaitement simétriques, il y

a deux engrenages qui s'engrènent ave deux tiges de réglage, au moyen d'une crémaillère.

Ces engrenages sont calés sur un pivot en forme de croissant de lune par un mentonnet.

En actionnant la manivelle de commande, les engrena= ges tournent en même temps que le pivot, deplaçant en étoile les quatre tiges dans un sens ou dans l'au= tre, d'une manière sjincronique.

A ces tiges rentrantes est fixée, par des mousquetons à ressorts (10), une extrémité des chaînes, tandis que l'autre extrémité, fixée de la même manière, se joint au cercle flexible.

Ce cercle s'ouvre facilement, de façon à pouvoir ai= sément s'enchevaucher à la partie intérieure des roues, sans être obligé de déplacer le véhicule.

Une fois le cercle fermé, il suffit d'actionner la manivelle de commande vers la droite.

Les tiges ainsi commandés par le couple roue dentée= crémaillère, sont rentrées dans la même mésure simul= tanément et tendent les parties de la chaîne qui vont envelopper le dos du pneu.

Une cheville de fixage (5) avec ressrts de rappel fixe la manivelle dans la position voulue en fonction du dégré de tension qu'on veut réaliser dans les chaînes.

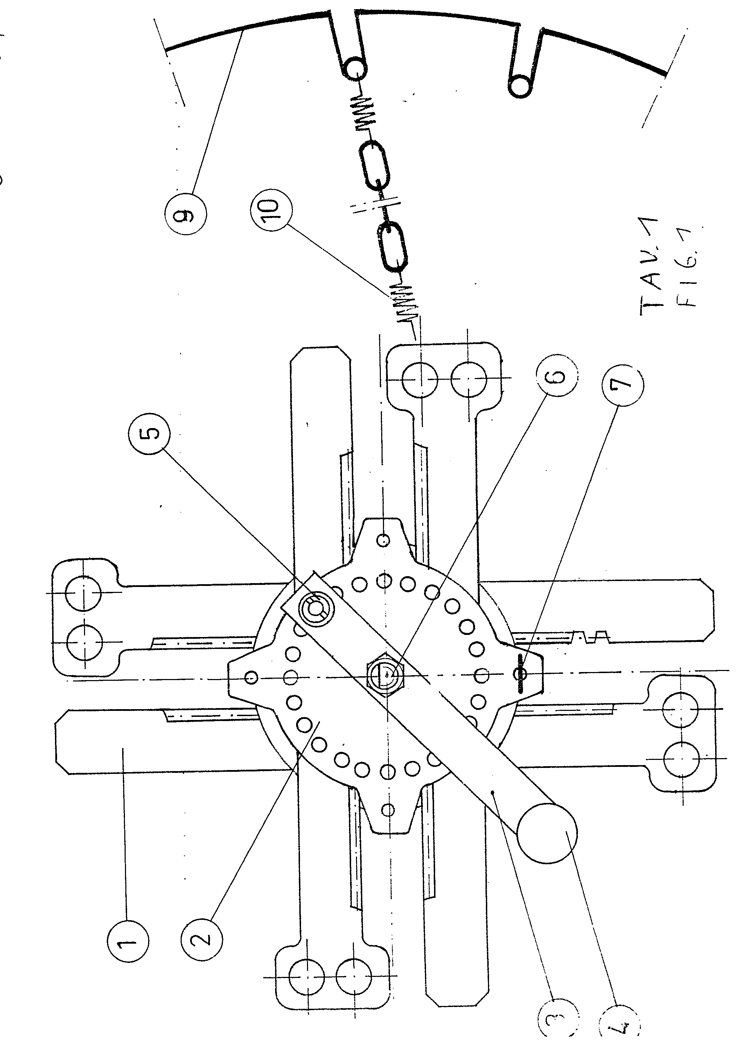

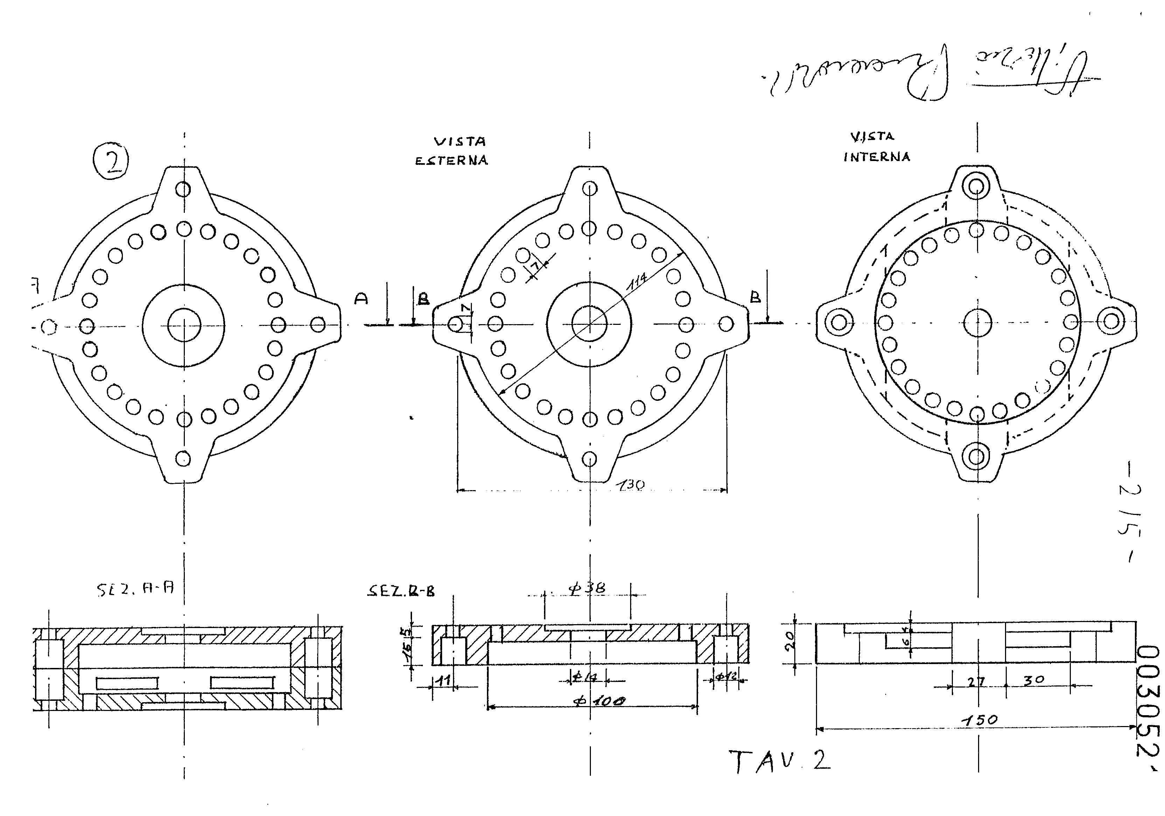

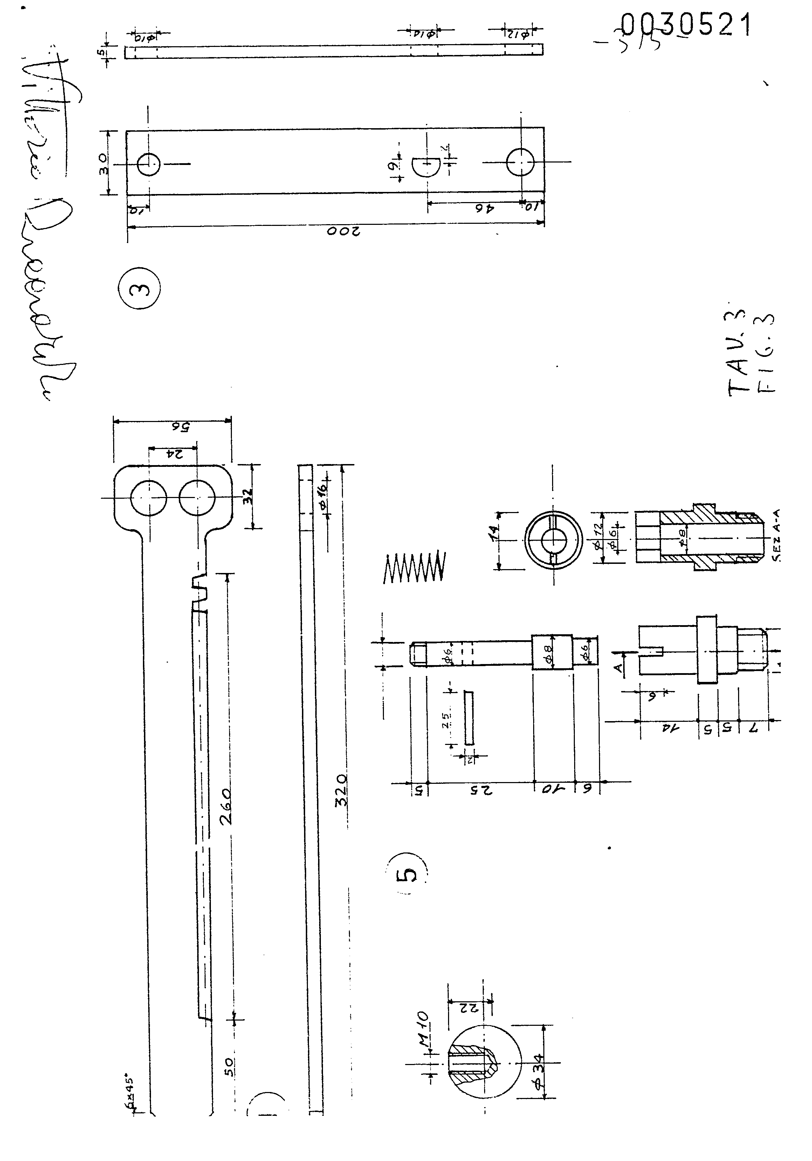

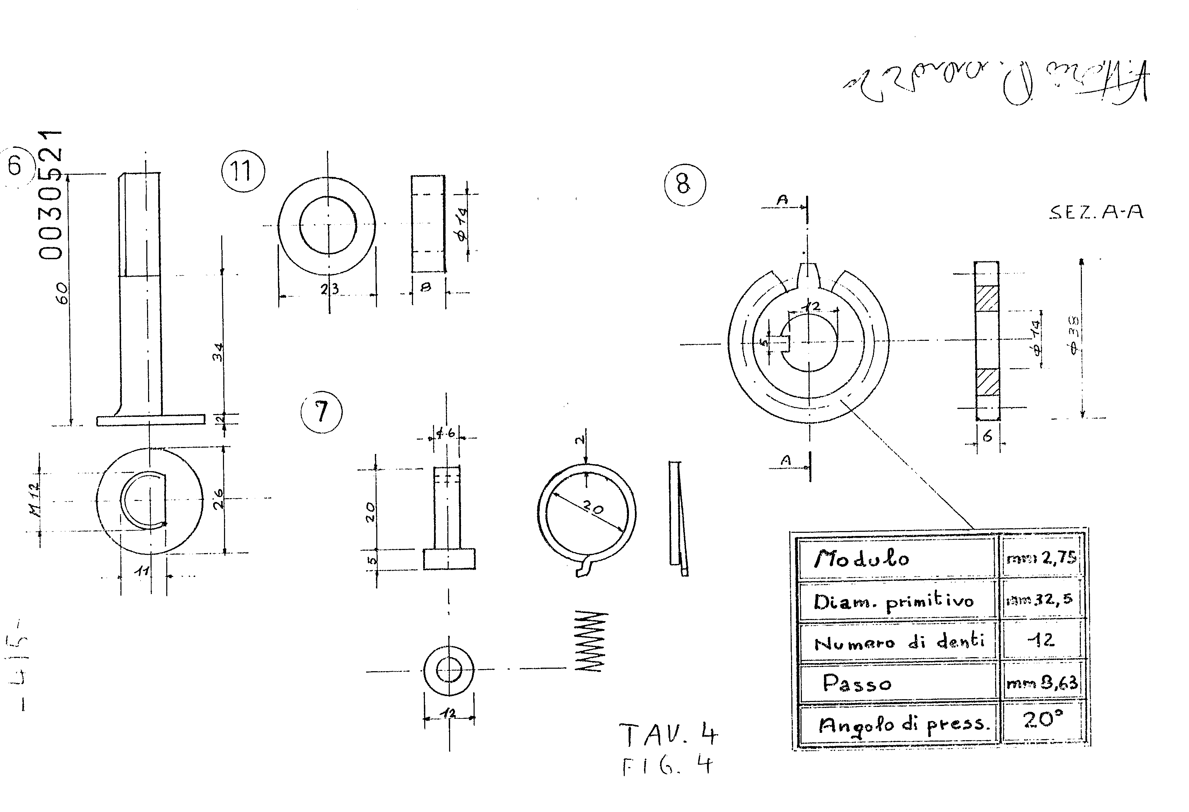

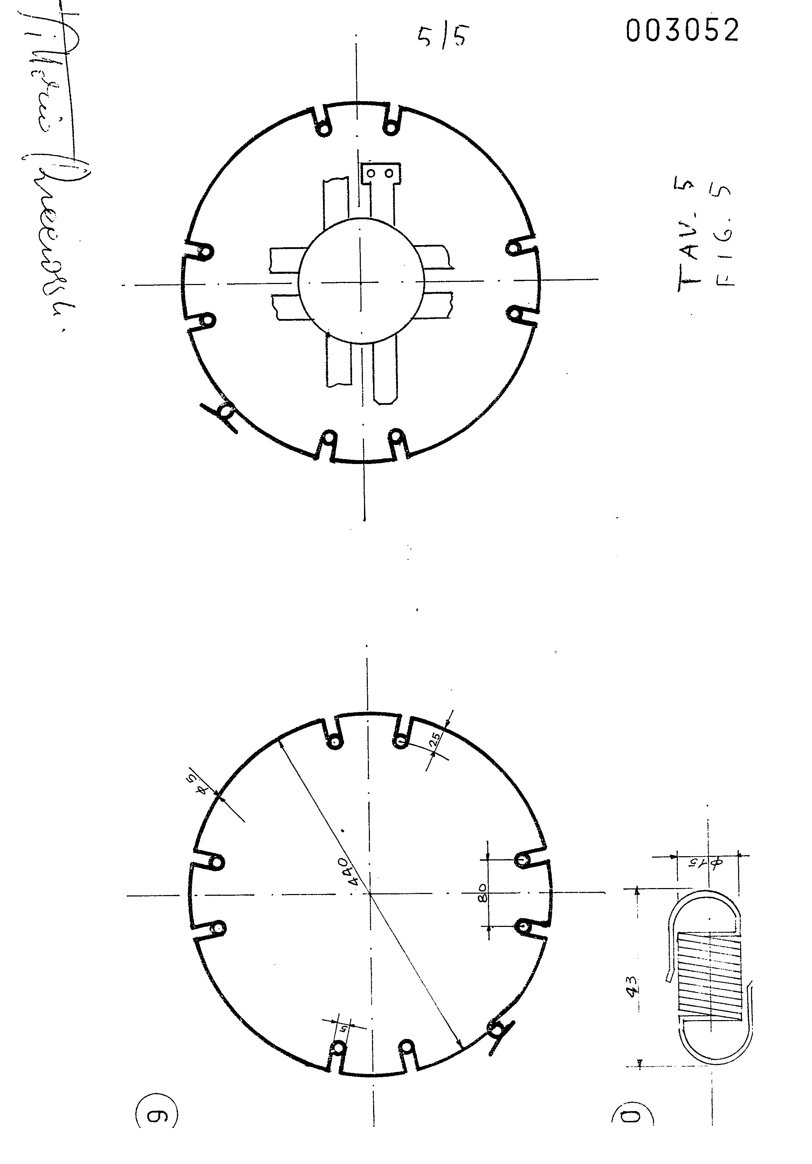

REVENDICATIONS

1) L'universalité d'application de l'outi, facilement
réalisable, car la longueur des moreaux de chaîne
peut être modifiée en enfilant les chaîne dan les
trous placés aux extrémités des tiges.

2) L'emploi de matériel léger et antirouille, tel que
l'alluminium.

3) Le systèm automatique de fixage des bras simples
à 90° et dubles à 180°.

4) La fermeture semi_automatique du cercle flexible
au moyen de deux crochets transversaux.

5) Le haut dégré d'adaptation aux situations contingentes. Ex.: trous, chuassées irrégulières.

0030521

TAV.1
FIG.1

003052

-215-

TAV. 2

VISTA INTERNA

VISTA ESTERNA

SEZ. B-B

SEZ. A-A

Ø38   Ø44   Ø100

130

150   30   27   9   20

11

②

TAV. 3
FIG. 3

0030521

⑥

0030521

M 12 · 60 · 11 · 26 · 2 · 34

⑪ 23 · 8 · φ14

⑦ 12 · 5 · 20 · φ6 · 20 · 2

TAV. 4
FIG. 4

⑧ SEZ. A-A · A · A · 5 · 12 · 6 · φ14 · φ38

| Modulo | mm 2,75 |
|---|---|
| Diam. primitivo | mm 32,5 |
| Numero di denti | 12 |
| Passo | mm 8,63 |
| Angolo di press. | 20° |

003052

5/5

TAV. 5
FIG. 5

⑩

⑨

# RAPPORT DE RECHERCHE EUROPEENNE

**Office européen des brevets**

| Catégorie | Citation du document avec indication, en cas de besoin, des parties pertinentes | Revendication concernee |
|---|---|---|
| X | FR - A - 1 588 627 (CHRISTIANA SPIGERVERK) <br> * Texte entier: figures 1-4 * | 1,3,4, 5 |
| X | FR - A - 2 324 474 (ELKEM SPIGER-VERKET) <br> * Texte entier, figures 1-3 * | 1,3,4, 5 |
| X | US - A - 3 053 302 (BOPST) <br> * Texte entier; figures 1,3,4 * | 1,3,4, 5 |
| X | FR - A - 2 253 641 (HUEBER) <br> * Page 3, ligne 25 - page 5, ligne 11; figures 1,3,4 * | 1,3,4 |
| PX | US - A - 4 209 049 (REGENSBURGER) <br> * Texte entier: figures 1-4 * | 1,3,4, 5 |

**DOCUMENTS CONSIDERES COMME PERTINENTS**

**CLASSEMENT DE LA DEMANDE** (Int. Cl.³)

B 60 C 27/10

**DOMAINES TECHNIQUES RECHERCHES** (Int. Cl.³)

B 60 C 27/

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a ete etabli pour toutes les revendications

| Lieu de la recherche | Date d'achevement de la recherche | Examinateur |
|---|---|---|
| La Haye | | |

OEB Form 1503.1  06.78